# EUROPEAN PATENT APPLICATION

(11) **EP 4 484 599 A1**
(43) Date of publication of application: **01.01.2025**
(21) Application number: 23927006.9
(22) Date of filing: 27.07.2023
(51) Int. Cl.: C22C 38/00, C22C 38/02, C22C 38/06

(54) **CORROSION-RESISTANT STEEL BAR AND PRODUCTION METHOD THEREFOR**

(30) Priority: 16.03.2023 CN 202310252937
(71) Applicant: Jiangsu Shagang Group Co., Ltd., Suzhou, Jiangsu 215625 (CN); Institute of Research of Iron and Steel, Jiangsu Province/Sha-Steel, Co. Ltd (CN), Suzhou, Jiangsu 215625 (CN)
(72) Inventor: CHEN, Huande, Suzhou, Jiangsu 215625 (CN); MA, Han, Suzhou, Jiangsu 215625 (CN); YANG, Xiaowei, Suzhou, Jiangsu 215625 (CN); ZHANG, Yu, Suzhou, Jiangsu 215625 (CN); ZHOU, Yun, Suzhou, Jiangsu 215625 (CN)
(74) Representative: Potter Clarkson
(86) International application number: PCT/CN2023/109561
(87) International publication number: WO 2024/187660

(57) **Abstract**

The present application relates to the technical field of steel smelting, in particular to a corrosion-resistant steel bar and a preparation method therefor, in percentage by weight, the corrosion-resistant steel bar comprises 0.03% to 0.15% of C, 0.8% to 2.0% of Si, 0.8% to 2.0% of Mn, 0.10% to 0.50% of Cu, 0.08% to 0.2% of P, 0.005% to 0.01% of S, 0 to 0.1% of Nb, 0 to 0.2% of V, 0 to 0.1% of Ti, 0 to 0.1% of Al, and the balance of Fe and inevitable impurities; wherein, 0.6≤Si/Mn≤2.0, 0.25%≤(Cu+P+S)≤0.62%. Through the design of Si, Mn, Cu, P, S and other alloying elements in a correlated manner, considering the strengthening function and corrosion resistance function of each element, the present application solves the problem that the corrosion resistance, mechanical properties and cost of the prior art cannot be achieved together, and overcomes the technical bias in the prior art that Cr, Ni or Mo must be added for improving the corrosion resistance.

## Description

### CROSS REFERENCE TO RELATED APPLICATIONS

The present application claims priority to Chinese Patent Application No. 202310252937.7, entitled "CORROSION-RESISTANT STEEL BAR AND PRODUCTIION METHOD THEREFOR", and filed to the China National Intellectual Property Administration on March 16, 2023, the entire contents of which are incorporated herein by reference.

### TECHNICAL FIELD

The present application relates to the technical field of steel smelting, in particular to a corrosion-resistant steel bar and a preparation method therefor.

### BACKGROUND

Corrosion of steel bars is the main factor leading to insufficient durability of reinforced concrete structures. In the prior art, the corrosion resistance of steel bars is improved by adding a large amount of alloying elements such as chromium, molybdenum, nickel and the like. However, the high cost and production difficulty of alloys make it difficult to promote and apply them on a large scale.

Chinese patent document CN114790532A disclosed a corrosion-resistant alloy steel bar and preparation method therefor. The corrosion-resistant alloy steel bar, in percentage by weight, comprises 0.05% to 0.25% of C, 1.05% to 2% of Si, 0.3% to 1.5% of Mn, 0.5% to 2.5% of Cr, 0.05% to 1% of Ni, 0.001% to 0.005% of O, 0.001% to 0.0035% of S, 0.005% to 0.1% of Ti, 0.005% to 0.1% of Al, 0.005% to 0.03% of V, 0.005% to 0.03% of Nb, and the balance of Fe and inevitable impurities; wherein the content of Si and Mn satisfies 2≤Si/Mn≤5, the content of Si and Cr satisfies 0.75≤Si/Cr≤1.5, and the content of Ti and Al satisfies 0.02%≤(Ti+Al)≤0.2%. The corrosion-resistant steel bar has better corrosion resistance without adding Mo element by designing of Si, Ti, Al and other elements in a correlated manner. However, Cr and Ni elements still need to be added, and their high content leads to increased costs. Therefore, the research and development of a steel bar with better corrosion resistance without adding Cr, Ni, Mo and other alloying elements is of great significance to the art.

### SUMMARY OF THE INVENTION

Therefore, the technical problem to be solved in the present application is to overcome the defects in the prior art that Cr, Ni, Mo and other alloying elements need to be added to improve the corrosion resistance of steel bars, resulting in high production cost, difficulty and others, so as to provide a corrosion resistant steel bar and a production method therefor.

For this purpose, the following technical solutions are provided in the present application.

The present application provides a corrosion-resistant steel bar, in percentage by weight, the corrosion-resistant steel bar comprises 0.03% to 0.15% of C, 0.8% to 2.0% of Si, 0.8% to 2.0% of Mn, 0.10% to 0.50% of Cu, 0.08% to 0.2% of P, 0.005% to 0.01% of S, 0 to 0.1% of Nb, 0 to 0.2% of V, 0 to 0.1% of Ti, 0 to 0.1% of Al, and the balance of Fe and inevitable impurities;
wherein, 0.6≤Si/Mn≤2.0, 0.25%≤(Cu+P+S)≤0.62%.

The corrosion-resistant steel bar satisfies at least one of the following (1) to (5):
(1) the content of C is in a range from 0.05% to 0.12%;
(2) the content of Si is in a range from 0.9% to 1.7%;
(3) the content of Mn is in a range from 0.9% to 1.8%;
(4) the content of Cu is in a range from 0.2% to 0.3%; and
(5) the content of P is in a range from 0.11% to 0.18%.

The corrosion-resistant steel bar satisfies at least one of the following (1) to (4):
(1) the content of C is in a range from 0.06% to 0.09%;
(2) the content of Si is in a range from 1.0% to 1.3%;
(3) the content of Mn is in a range from 1.0% to 1.5%; and
(4) the content of P is in a range from 0.13% to 0.17%.

The present application provides a method for producing the corrosion-resistant steel bar above, wherein the method comprises the processes of smelting, refining, continuous casting, casting billet heating and hot continuous rolling.

The process of continuous casting satisfies at least one of (1) to (4):
(1) a low-carbon steel protective slag with a slag layer thickness ranging from 8 mm to 10mm is used; wherein, a content of carbon in the low-carbon steel is not exceed 0.15%;
(2) a crystallizer has a water flow rate ranging from 1,950 L/min to 2,050L/min;
(3) the crystallizer has an electromagnetic stirring current ranging from 330A to 370A with a frequency ranging from 3Hz to 5Hz, and an end electromagnetic stirring current ranging from 380A to 420A with a frequency ranging from 10Hz to 12Hz; and
(4) a casting speed is in a range from 2.5m/min to 3.5m/min.

The process of smelting satisfies at least one of (1) to (3):
(1) a tapping temperature is in a range from 1,600°C to 1,640°C;
(2) silicon-manganese, ferro-silicon, and lime are added in sequence during tapping-deoxidizing-alloying;
   wherein the silicon-manganese is added in an amount ranging from 10 kg/t to 30kg/t, and the ferro-silicon is added in an amount ranging from 15 kg/t to 30kg/t; and
(3) a bottom blowing pressure in early stage is in a range from 0.4 MPa to 0.5MPa and a bottom blowing pressure in later stage is in a range from 0.3 MPa to 0.4MPa.

The early stage refers to the process from the beginning of adding alloy to the end of adding alloy;

The later stage refers to the process from when the composition of the molten steel reaches the target composition to the end of smelting.

In the process of casting billet heating: the heating temperature is in a range from 1,200°C to 1,250°C.

In the process of hot continuous rolling: a temperature of the steel bar moved onto a cooling bed is in a range from 850°C to 900°C.

The process of refining satisfies at least one of (1) to (3):
(1) the process of refining comprises a step of adding ferro-phosphorus and copper;
(2) a stirring for refining is carried out for 10 minutes or more; and
(3) a tapping temperature is in a range from 1,580°C to 1,600°C.

A mass content of phosphorus in the ferro-phosphorus is in a range from 20% to 25%;
the ferro-phosphorus is added in an amount ranging from 3kg/t to 6kg/t; and
the copper is added in an amount ranging from 1.5kg/t to 3.5kg/t.

The technical solution of the present application has the following advantages.
1. The corrosion-resistant steel bar provided in the present application, in percentage by weight, comprises 0.03% to 0.15% of C, 0.8% to 2.0% of Si, 0.8% to 2.0% of Mn, 0.10% to 0.50% of Cu, 0.08% to 0.2% of P, 0.005% to 0.01% of S, 0 to 0.1% of Nb, 0 to 0.2% of V, 0 to 0.1% of Ti, 0 to 0.1% of Al, and the balance of Fe and inevitable impurities; wherein, 0.6≤Si/Mn≤2.0, 0.25%≤(Cu+P+S)≤0.62%. Through the design of Si, Mn, Cu, P, S and other alloying elements in a correlated manner, considering the strengthening function and corrosion resistance function of each element, the present application makes up for the decline of steel corrosion resistance caused by the lack of Cr, Ni and Mo, reduces the cost of steel production. The coordinated effect of various elements at specific contents can fully exert its corrosion resistance and strengthening effects, solve the problem of the prior art that the corrosion resistance, mechanical properties and cost cannot be achieved together, and overcome the technical bias in the prior art that Cr, Ni or Mo must be added for improving the corrosion resistance. In the present application, the synergistic coupling among Si, Mn, Cu and S is especially applied to improve the corrosion resistance of chlorine salts as well as the coordination and matching of steel strength and plasticity. The corrosion-resistant steel bar provided in the present application can provide both corrosion resistance and low cost, overcome the problem in the prior art that the corrosion resistance and alloy cost cannot be coordinated and matched, and significantly extend the service life of construction projects under chlorine salt erosion environment.

C element plays a strengthening role, and excessive content of C is easy to form carbides, which can reduce the corrosion resistance, plasticity, toughness and welding ability of steel material. Si element plays the role of deoxidizer, which can significantly reduce the oxygen content in steel and reduce the formation of oxide inclusions. High content of Si is conducive to the formation of silicate phase on the surface of steel material, blocking the transmission and aggregation of corrosive media, and improving corrosion resistance. At the same time, Si is a strengthening element and ferrite forming element, and high content of Si is conducive to the regulation of strength and plasticity, overcoming the brittleness problem caused by excessive content of Cu and P, and optimizing the mechanical properties. Excessive content of Si is not conducive to welding. Mn can significantly improve the strength of steel material through solid solution strengthening. If content of Mn is excessive, it will increase the hardenability. Since Mn and S are easy to form MnS inclusions, reducing the plasticity and corrosion resistance of the steel material, by controlling the content of Mn and Cu element to make Cu to consume S, the formation of MnS is inhibited, the occurrence of MnS corrosion behavior is prevented, and corrosion resistance is improved. Cu is a corrosion-resistant element, and CuS is formed with S through the enrichment of rust layer to improve the corrosion resistance, but excessive content of Cu is easy to cause copper-brittleness. P can improve the corrosion resistance of steel bars, and its synergistic effect with Cu is the best, but excessive content of P will increase the cold-brittleness of steel. S and Cu form dense CuS, which can hinder the transmission of corrosive media and help improve corrosion resistance. Although S and Mn are easy to form inclusions, CuS is easier to form than MnS, therefore, an appropriate amount of S element is a favorable element for the present application, and its combination with Cu can improve corrosion resistance.

Ti is a corrosion-resistant and strengthening element that can improve the corrosion potential and anti-corrosiveness of steel material. Through the fine grain strengthening effect, the mechanical properties of steel material can be improved. Excessive content of Ti can easily generate oxides, which can block the submerged entry nozzle during continuous casting. Al deoxidizes during the smelting process, reducing the oxygen content in the molten steel. At the same time, Al can form oxides in the steel, accumulate in the rust layer, and improve corrosion resistance. If its content is excessive, it is easy to block the submerged entry nozzle during continuous casting. V and Nb are both strengthening elements that form carbonitrides in steel, which can improve the mechanical properties of the steel material through fine-grained strengthening and precipitation strengthening. The strengthening effect is related to the content of C and N.

The present application adopts the composition of low-carbon alloy steel, coordinates the contents of various elements through the correlation design of various elements, fully exerts the corrosion resistance and strengthening effect of various elements, and solves the problem of prior art not being able to achieve corrosion resistance, mechanical properties, and low cost together through fine control of alloy ratio and multi-phase microstructure.

2. The production process of corrosion-resistant steel bar provided in the present application produces corrosion-resistant steel bars with better resistance to chloride salts corrosion, does not require the addition of Cr, Ni and Mo, has low cost and low production process difficulty. The microstructure of the steel bars obtained by this process is pearlite and ferrite, which has a ferrite content ranging from 50% to 75%, a yield strength greater than or equal to 400MPa, an elongation after fracture greater than or equal to 30%, a total elongation at maximum force greater than or equal to 20%, a ratio of tensile strength to yield strength greater than or equal to 1.30, and a relative corrosion rate not more than 35% in a chloride salt corrosion environment (5% NaCl, 35°C, humidity of 70%) compared with ordinary steel bar HRB400.

3. The production process of corrosion-resistant steel bars provided in the present application achieves precise control of multi-element alloy content and low-cost production by controlling the type and addition method of alloy during the steel bar production process, and achieves the adjustment and control of ferrite/pearlite multi-phase microstructure through the controlled rolling and controlled cooling process (casting billet heating temperature, the temperature of steel bar moved onto a cooling bed, etc.), ensuring the strengthening effect of alloying elements, optimizing the coordination and matching between corrosion resistance and strength-plasticity of steel bar, and realizing the development of low-cost and high corrosion-resistant alloy steel bars.

The tapping temperature in the smelting process of the present application (1) can ensure that the scrap steel is completely dissolved during smelting, and (2) can ensure the temperature at which the molten steel enters the refining process. This is because adding alloys during the smelting tapping process will cause the temperature of the molten steel to decrease, affecting the refining temperature. The present application can achieve high efficient smelting and precise control of composition by controlling smelting.

Adding ferro-phosphorus in the refining process is because ferro-phosphorus is an easily oxidizable element, and when added in other stages, the yield of the element is low. The tapping temperature of refining is in a range from 1,580°C to 1,600°C, which is related to the continuous casting temperature. This is because the refining temperature determines the continuous casting temperature, while the continuous casting temperature is calculated based on the alloy composition and directly related to the content of various elements in the steel bar.

Low carbon steel protective slag is used for continuous casting, with a slag layer thickness ranging from 8 mm to 10mm, which (1) reduces the influence of carbon in the protective slag on the content of carbon in the molten steel to ensure precise control of the content of carbon in the finished product, satisfy low-carbon requirements, and prevent carbides from affecting corrosion resistance; and (2) can reduce the contact and convection between the molten steel and air by slag layer, and maintain the stability of the molten steel temperature. The electromagnetic stirring parameters are closely related to the uniformity of molten steel composition. The product of the present application is corrosion-resistant steel, and the purer the molten steel, the better its corrosion resistance. The water flow rate of the crystallizer mainly plays a cooling role. Due to the large cross-sectional size of the billet, there is a temperature difference between the surface and the core. If the water flow rate ratio is not appropriate, the surface quality will be poor, and cracks will occur. The casting speed is affected by the temperature of the molten steel, cooling capacity and the like, and an appropriate casting speed can ensure the achievement of high uniformity of casting billet while avoiding steel leakage accidents.

The heating temperature of the casting billet affects the dissolution of alloying elements and grain size, and has a significant impact on the microstructure and mechanical properties of the product. This parameter setting is determined based on the alloy composition (element dissolution temperature) and grain size; the temperature of steel bar when moved on a cooling bed is related to the cooling method, and is designed mainly based on the continuous cooling curve of the undercooled austenite of the steel bar.

### DETAILED DESCRIPTION

The following examples are provided for a better understanding of the present application, are not limited to the best implementations, and do not constitute a limitation on the content or scope of protection of the present application. Any product identical or similar to the present application, derived by anyone under the inspiration of the present application or by combining the present application with other features of the prior art, falls within the scope of protection of the present application.

Where specific experimental steps or conditions are not indicated in the examples, the operations or conditions of conventional experimental steps described in the literatures in the present art can be followed. The reagents or instruments used without the manufacturer indicated are conventional reagent and products that are commercially available.

A corrosion-resistant steel bar is provided in the following specific example, in percentage by weight, the corrosion-resistant steel bar comprises 0.03% to 0.15% of C, 0.8% to 2.0% of Si, 0.8% to 2.0% of Mn, 0.10% to 0.50% of Cu, 0.08% to 0.2% of P, 0.005% to 0.01% of S, 0-0.1% of Nb, 0-0.2% of V, 0-0.1% of Ti, 0-0.1% of Al, and the balance of Fe and inevitable impurities;
wherein, 0.6≤Si/Mn≤2.0, 0.25%≤(Cu+P+S)≤0.62%.

Optionally, the content of C is in a range from 0.05% to 0.12%; more optionally, from 0.06% to 0.09%;
the content of Si is in a range from 0.9% to 1.7%; more optionally, from 1.0% to 1.3%;
the content of Mn is in a range from 0.9% to 1.8%; more optionally, from 1.0% to 1.5%;
the content of Cu is in a range from 0.2% to 0.3%; and
the content of P is in a range from 0.11% to 0.18%; more optionally, from 0.13% to 0.17%.

The process for producing the corrosion-resistant steel bar above comprises smelting, refining, continuous casting, casting billet heating, and hot continuous rolling as follows.

Smelting: molten steel is smelted in a converter, with a tapping temperature ranging from 1,600°C to 1,640°C. The tapping-deoxidizing-alloying is carried out by adding alloys and slag materials in the order of silicon-manganese, ferro-silicon, and lime. Based on 1 ton of molten steel, the silicon-manganese is added in an amount ranging from 10 kg/t to 30kg/t, and the ferro-silicon is added in an amount ranging from 15kg/t to 30kg/t. Before tapping, the bottom blowing argon gas control valve of the steel ladle was opened, and argon gas was blown throughout the tapping process. The bottom blowing pressure in early stage is in a range from 0.4 MPa to 0.5MPa and the bottom blowing pressure in later stage is in a range from 0.3 MPa to 0.4MPa.

Refining: after refining begins, ferro-phosphorus and copper plates were added separately. The soft stirring for refining is carried out for 10 minutes or more, and the tapping temperature is in a range from 1,580°C to 1,600°C. Based on 1 ton of molten steel, the ferro-phosphorus is added in an amount ranging from 3kg/t to 6kg/t; a content of phosphorus in the ferro-phosphorus is in a range from 20wt% to 25wt%; and the copper plate is added in an amount ranging from 1.5kg/t to 3.5kg/t.

Continuous casting: low carbon steel protective slag with a slag layer thickness ranging from 8 mm to 10mm is used, a casting speed is in a range from 2.5m/min to 3.5m/min, a water flow rate of a crystallizer is in a range from 1,950L/min to 2,050L/min, and the crystallizer has an electromagnetic stirring current ranging from 330A to 370A with a frequency ranging from 3Hz to 5Hz and an end electromagnetic stirring current ranging from 380A to 420A with a frequency ranging from 10Hz to 12Hz.

Casting billet heating: the heating temperature is in a range from 1,200°C to 1,250°C.

Hot continuous rolling: the temperature of the steel bar moved onto a cooling bed is in a range from 850°C to 900°C, and it is naturally cooled to room temperature after rolling. The control of the cooling rate after rolling and the temperature of the steel bar moved onto a cooling bed is conducive to obtaining the ideal microstructure.

### Example 1

This example provides a corrosion-resistant steel bar, in percentage by weight, comprising 0.06% of C, 1.0% of Si, 1.0% of Mn, 0.2% of Cu, 0.13% of P, 0.005% of S, 0.075% of Nb, and the balance of Fe and inevitable impurities;
wherein, Si/Mn=1.0, Cu+P+S=0.34%.

The method for producing the corrosion-resistant steel bar above comprises the following processes.

The process of smelting: molten steel was smelted in the converter with a tapping temperature of 1630°C. Based on 1 ton of molten steel, 20kg/t of silicon-manganese (FeMn₆₅S₁₇) and 20kg/t of ferro-silicon (FeSi₇₂) were added during tapping; the argon gas was blown throughout the tapping process, and the bottom blowing pressure in the early stage was controlled to be 0.4MPa and the bottom blowing pressure in the later stage was controlled to be 0.3MPa.

The process of refining: ferro-phosphorus (content of P is 23%, addition amount is 4kg/t), copper plate (content of Cu is 99%, addition amount is 1.5kg/t), ferro-niobium (content of Nb is 65%, addition amount is 1.2kg/t) were added; soft stirring for refining was carried out for 12 minutes, and the tapping temperature for continuous casting was 1,600°C.

The process of continuous casting: the thickness of slag layer was 8mm; casting speed was 2.8m/min; the water flow rate of the crystallizer was 2,000 ± 50L/min, the crystallizer has a electromagnetic stirring current of 350A with a frequency of 3Hz and an end electromagnetic stirring current of 400A with a frequency of 10Hz; and the cross-sectional size of the casting billet was 140mm×140mm (width×height).

The processes of casting billet heating and hot continuous rolling: the heating temperature was 1,220°C, the temperature of the steel bar moved onto the cooling bed was 880°C, and after rolling, it was naturally cooled to room temperature. The diameter of the steel bar was 20mm.

### Example 2

This example provides a corrosion-resistant steel bar, in percentage by weight, comprising 0.08% of C, 1.28% of Si, 1.0% of Mn, 0.25% of Cu, 0.15% of P, 0.005% of S, 0.15% of V, and the balance of Fe and inevitable impurities;
wherein, Si/Mn=1.28, Cu+P+S=0.41%.

The method for producing the corrosion-resistant steel bar above comprises the following processes.

The process of smelting: molten steel was smelted in the converter with a tapping temperature of 1,630°C. 20kg/t of silicon-manganese (FeMn₆₅S₁₇) and 23kg/t of ferro-silicon (FeSi₇₂) were added during tapping; the argon gas was blown throughout the tapping process, and the bottom blowing pressure in the early stage was controlled to be 0.42MPa and the bottom blowing pressure in the later stage was controlled to be 0.32MPa.

The process of refining: ferro-phosphorus (content of P is 23%, addition amount is 4.5kg/t), copper plate (content of Cu is 99%, addition amount is 1.8kg/t), ferro-vanadium (content of Nb is 48%, addition amount is 3.3kg/t) were added; soft stirring for refining was carried out for 13 minutes, the tapping temperature for continuous casting was 1,595°C.

The process of continuous casting: the thickness of slag layer was 10mm; casting speed was 3.0m/min; the water flow rate of the crystallizer was 2,000 ± 50L/min, the crystallizer has an electromagnetic stirring current of 330A with a frequency of 5Hz and an end electromagnetic stirring current of 390A with a frequency of 10Hz; and the cross-sectional size of the casting billet was 140mm×140mm (width×height).

The processes of casting billet heating and hot continuous rolling: the heating temperature was 1,250°C, the temperature of the steel bar moved onto the cooling bed was 890°C, and after rolling, it was naturally cooled to room temperature. The diameter of the steel bar was 28mm.

### Example 3

This example provides a corrosion-resistant steel bar, in percentage by weight, comprising 0.09% of C, 1.3% of Si, 1.5% of Mn, 0.3% of Cu, 0.17% of P, 0.01% of S, 0.10% of Nb, 0.01% of Ti, 0.01% of Al, and the balance of Fe and inevitable impurities;
wherein, Si/Mn=0.87, Cu+P+S=0.48%.

The method for producing the corrosion-resistant steel bar above comprises the following processes.

The process of smelting: molten steel was smelted in the converter with a tapping temperature of 1,630°C. 25kg/t of silicon-manganese (FeMn₆₅S₁₇) and 23kg/t of ferro-silicon (FeSi₇₂) were added during tapping; the argon gas was blown throughout the tapping process, and the bottom blowing pressure in the early stage was controlled to be 0.45MPa and the bottom blowing pressure in the later stage was controlled to be 0.35MPa.

The process of refining: ferro-phosphorus (content of P is 23%, addition amount is 5kg/t), copper plate (content of Cu is 99%, addition amount is 2.0kg/t), ferro-niobium (content of Nb is 65%, addition amount is 1.6kg/t), ferro-titanium (content of Ti is 30%, addition amount is 0.5kg/t), aluminum particles (content of Al is 99%, addition amount is 0.15kg/t) were added; soft stirring for refining was carried out for 15 minutes, the tapping temperature for continuous casting was 1,595°C.

The process of continuous casting: the thickness of slag layer was 9mm; casting speed was 2.6m/min; the water flow rate of the crystallizer was 2,000 ± 50L/min, the crystallizer has an electromagnetic stirring current of 370A with a frequency of 3.5Hz and an end electromagnetic stirring current of 420A with a frequency of 11Hz; and the cross-sectional size of the casting billet was 140mm×140mm (width×height).

The processes of casting billet heating and hot continuous rolling: the heating temperature was 1,200°C, the temperature of the steel bar moved onto the cooling bed was 900°C, and after rolling, it was naturally cooled to room temperature. The diameter of the steel bar was 32mm.

### Example 4

This example provides a corrosion-resistant steel bar, in percentage by weight, comprising 0.05% of C, 0.9% of Si, 1.49% of Mn, 0.5% of Cu, 0.11% of P, 0.01% of S, 0.03% of Nb, 0.15% of V, and the balance of Fe and inevitable impurities;
wherein, Si/Mn=0.60, Cu+P+S=0.62%.

The method for producing the corrosion-resistant steel bar above comprises the following processes.

The process of smelting: molten steel was smelted in the converter with a tapping temperature of 1,630°C. 25kg/t of silicon-manganese (FeMn₆₅S₁₇) and 18kg/t of ferro-silicon (FeSi₇₂) were added during tapping; the argon gas was blown throughout the tapping process, and the bottom blowing pressure in the early stage was controlled to be 0.4MPa and the bottom blowing pressure in the later stage was controlled to be 0.3MPa.

The process of refining: ferro-phosphorus (content of P is 23%, addition amount is 3.5kg/t), copper plate (content of Cu is 99%, addition amount is 3.5kg/t), ferro-niobium (content of Nb is 65%, addition amount is 0.5kg/t), ferro-vanadium (content of V is 48%, addition amount is 3.3kg/t) were added; soft stirring for refining was carried out for 11 minutes, the tapping temperature for continuous casting was 1,600°C.

The process of continuous casting: the thickness of slag layer was 8mm; casting speed was 3.5m/min; the water flow rate of the crystallizer was 2,000 ± 50L/min, the crystallizer has an electromagnetic stirring current of 350A with a frequency of 5Hz and an end electromagnetic stirring current of 380A with a frequency of 12Hz; and the cross-sectional size of the casting billet was 140mm×140mm (width×height).

The processes of casting billet heating and hot continuous rolling: the heating temperature was 1,250°C, the temperature of the steel bar moved onto the cooling bed was 850°C, and after rolling, it was naturally cooled to room temperature. The diameter of the steel bar was 16mm.

### Example 5

This example provides a corrosion-resistant steel bar, in percentage by weight, comprising 0.12% of C, 1.7% of Si, 0.9% of Mn, 0.1% of Cu, 0.18% of P, 0.01% of S, 0.1% of Ti, and the balance of Fe and inevitable impurities;
wherein, Si/Mn=1.89, Cu+P+S=0.29%.

The method for producing the corrosion-resistant steel bar above comprises the following processes.

The process of smelting: molten steel was smelted in the converter with a tapping temperature of 1,630°C. 11kg/t of silicon-manganese (FeMn₆₅S₁₇) and 25kg/t of ferro-silicon (FeSi₇₂) were added during tapping; the argon gas was blown throughout the tapping process, and the bottom blowing pressure in the early stage was controlled to be 0.5MPa and the bottom blowing pressure in the later stage was controlled to be 0.4MPa.

The process of refining: ferro-phosphorus (content of P is 23%, addition amount is 5.5kg/t), copper plate (content of Cu is 99%, addition amount is 1.5kg/t), ferro-titanium (content of Ti is 30%, addition amount is 5kg/t) were added; soft stirring for refining was carried out for 15 minutes, the tapping temperature for continuous casting was 1,590°C.

The process of continuous casting: the thickness of slag layer was 10mm; casting speed was 2.5m/min; the water flow rate of the crystallizer was 2,000 ± 50L/min, the crystallizer has an electromagnetic stirring current of 350A with a frequency of 5Hz and an end electromagnetic stirring current of 400A with a frequency of 12Hz; and the cross-sectional size of the casting billet was 140mm×140mm (width×height).

The processes of casting billet heating and hot continuous rolling: the heating temperature was 1,250°C, the temperature of the steel bar moved onto the cooling bed was 880°C, and after rolling, it was naturally cooled to room temperature. The diameter of the steel bar was 10mm.

### Example 6

This example provides a corrosion-resistant steel bar, in percentage by weight, comprising 0.03% of C, 0.8% of Si, 0.8% of Mn, 0.3% of Cu, 0.08% of P, 0.005% of S, 0.2% of V, 0.01% of Ti, 0.01% of Al, and the balance of Fe and inevitable impurities;
wherein, Si/Mn=1, Cu+P+S=0.39%.

The method for producing the corrosion-resistant steel bar above comprises the following processes.

The process of smelting: molten steel was smelted in the converter with a tapping temperature of 1,610°C. 10kg/t of silicon-manganese (FeMn₆₅S₁₇) and 15kg/t of ferro-silicon (FeSi₇₂) were added during tapping; the argon gas was blown throughout the tapping process, and the bottom blowing pressure in the early stage was controlled to be 0.4MPa and the bottom blowing pressure in the later stage was controlled to be 0.3MPa.

The process of refining: ferro-phosphorus (content of P is 23%, addition amount is 3kg/t), copper plate (content of Cu is 99%, addition amount is 2kg/t), ferro-vanadium (content of V is 48%, addition amount is 4kg/t), ferro-titanium (content of Ti is 30%, addition amount is 0.5kg/t), aluminum particles (content of Al is 99%, addition amount is 0.15kg/t) were added; soft stirring for refining was carried out for 10 minutes, the tapping temperature for continuous casting was 1,595°C.

The process of continuous casting: the thickness of slag layer was 9.5mm; casting speed was 2.6m/min; the water flow rate of the crystallizer was 2,000 ± 50L/min, the crystallizer has an electromagnetic stirring current of 345A with a frequency of 3.5Hz and an end electromagnetic stirring current of 405A with a frequency of 11Hz; and the cross-sectional size of the casting billet was 140mm×140mm (width×height).

The processes of casting billet heating and hot continuous rolling: the heating temperature was 1,200°C, the temperature of the steel bar moved onto the cooling bed was 900°C, and after rolling, it was naturally cooled to room temperature. The diameter of the steel bar was 18mm.

### Example 7

This example provides a corrosion-resistant steel bar, in percentage by weight, comprising 0.15% of C, 2% of Si, 2% of Mn, 0.25% of Cu, 0.2% of P, 0.01% of S, 0.1% of Al, and the balance of Fe and inevitable impurities;
wherein, Si/Mn=1, Cu+P+S=0.46%.

The method for producing the corrosion-resistant steel bar above comprises the following processes.

The process of smelting: molten steel was smelted in the converter with a tapping temperature of 1,640°C. 30kg/t of silicon-manganese (FeMn₆₅S₁₇) and 30kg/t of ferro-silicon (FeSi₇₂) were added during tapping; the argon gas was blown throughout the tapping process, and the bottom blowing pressure in the early stage was controlled to be 0.5MPa and the bottom blowing pressure in the later stage was controlled to be 0.4MPa.

The process of refining: ferro-phosphorus (content of P is 23%, addition amount is 6kg/t), copper plate (content of Cu is 99%, addition amount is 1.8kg/t), aluminum particles (content of Al is 99%, addition amount is 1.5kg/t) were added; soft stirring for refining was carried out for 15 minutes, the tapping temperature for continuous casting was 1,600°C.

The process of continuous casting: the thickness of slag layer was 8.5mm; casting speed was 2.6m/min; the water flow rate of the crystallizer was 2,000 ± 50L/min, the crystallizer has an electromagnetic stirring current of 350A with a frequency of 5Hz and an end electromagnetic stirring current of 410A with a frequency of 12Hz; and the cross-sectional size of the casting billet was 140mm×140mm (width×height).

The processes of casting billet heating and hot continuous rolling: the heating temperature was 1,250°C, the temperature of the steel bar moved onto the cooling bed was 900°C, and after rolling, it was naturally cooled to room temperature. The diameter of the steel bar was 25mm.

### Example 8

This example provides a corrosion-resistant steel bar, in percentage by weight, comprising 0.08% of C, 2% of Si, 1% of Mn, 0.145% of Cu, 0.1% of P, 0.005% of S, 0.05% of Nb, 0.05% of V, 0.1% of Ti, 0.1% of Al, and the balance of Fe and inevitable impurities;
wherein, Si/Mn=2, Cu+P+S=0.25%.

The method for producing the corrosion-resistant steel bar above comprises the following processes.

The process of smelting: molten steel was smelted in the converter with a tapping temperature of 1,630°C. 20kg/t of silicon-manganese (FeMn₆₅S₁₇) and 30kg/t of ferro-silicon (FeSi₇₂) were added during tapping; the argon gas was blown throughout the tapping process, and the bottom blowing pressure in the early stage was controlled to be 0.4MPa and the bottom blowing pressure in the later stage was controlled to be 0.3MPa.

The process of refining: ferro-phosphorus (content of P is 23%, addition amount is 3.5kg/t), copper plate (content of Cu is 99%, addition amount is 1.9kg/t), ferro-niobium (content of Nb is 65%, addition amount is 0.8kg/t), ferro-vanadium (content of V is 48%, addition amount is 1kg/t), ferro-titanium (content of Ti is 30%, addition amount is 5kg/t); aluminum particles (content of Al is 99%, addition amount is 1.5kg/t) were added; soft stirring for refining was carried out for 15 minutes, the tapping temperature for continuous casting was 1,600°C.

The process of continuous casting: the thickness of slag layer was 10mm; casting speed was 2.6m/min; the water flow rate of the crystallizer was 2,000 ± 50L/min, the crystallizer has an electromagnetic stirring current of 350A with a frequency of 5Hz and an end electromagnetic stirring current of 395A with a frequency of 12Hz; and the cross-sectional size of the casting billet was 140mm×140mm (width×height).

The processes of casting billet heating and hot continuous rolling: the heating temperature was 1,250°C, the temperature of the steel bar moved onto the cooling bed was 900°C, and after rolling, it was naturally cooled to room temperature. The diameter of the steel bar was 28mm.

### Comparative Example 1

This example provides a corrosion-resistant steel bar, in percentage by weight, comprising 0.25% of C, 0.5% of Si, 1.5% of Mn, 0.3% of Cu, 0.035% of P, 0.0035% of S, 0.05% of Nb, 0.1% of Ti, and the balance of Fe and inevitable impurities;
wherein, Si/Mn=0.33, Cu+P+S=0.34%.

The method for producing the corrosion-resistant steel bar above comprises the following processes.

The process of smelting: molten steel was smelted in the converter with a tapping temperature of 1,600°C. 20kg/t of silicon-manganese (FeMn₆₅S₁₇) and 5kg/t of ferro-silicon (FeSi₇₂) were added during tapping; the argon gas was blown throughout the tapping process, and the bottom blowing pressure in the early stage was controlled to be 0.4MPa and the bottom blowing pressure in the later stage was controlled to be 0.3MPa.

The process of refining: ferro-phosphorus was not added, copper plate (content of Cu is 99%, addition amount is 2kg/t), ferro-niobium (content of Nb is 65%, addition amount is 0.8kg/t), ferro-titanium (content of Ti is 30%, addition amount is 5kg/t) were added; soft stirring for refining was carried out for 15 minutes, the tapping temperature for continuous casting was 1,600°C.

The process of continuous casting: the thickness of slag layer was 8mm; casting speed was 2.6m/min; the water flow rate of the crystallizer was 2,000 ± 50L/min, the crystallizer has an electromagnetic stirring current of 350A with a frequency of 4Hz and an end electromagnetic stirring current of 400A with a frequency of 11Hz; and the cross-sectional size of the casting billet was 140mm×140mm (width×height).

The processes of casting billet heating and hot continuous rolling: the heating temperature was 1,250°C, the temperature of the steel bar moved onto the cooling bed was 900°C, and after rolling, it was naturally cooled to room temperature. The diameter of the steel bar was 25mm.

### Comparative Example 2

This example provides a corrosion-resistant steel bar, in percentage by weight, comprising 0.08% of C, 2.5% of Si, 0.5% of Mn, 0.035% of P, 0.0035% of S, 0.15% of V, 0.1% of Ti, 0.1% of Al, and the balance of Fe and inevitable impurities;
wherein, Si/Mn=5, Cu+P+S=0.04%.

The method for producing the corrosion-resistant steel bar above comprises the following processes.

The process of smelting: molten steel was smelted in the converter with a tapping temperature of 1,600°C. 8kg/t of silicon-manganese (FeMn₆₅S₁₇) and 35kg/t of ferro-silicon (FeSi₇₂) were added during tapping; the argon gas was blown throughout the tapping process, and the bottom blowing pressure in the early stage was controlled to be 0.5MPa and the bottom blowing pressure in the later stage was controlled to be 0.4MPa.

The process of refining: ferro-phosphorus and copper plate were not added, ferro-vanadium (content of V is 48%, addition amount is 3kg/t), ferro-titanium (content of Ti is 30%, addition amount is 5kg/t); aluminum particles (content of Al is 99%, addition amount is 1.5kg/t) were added; soft stirring for refining was carried out for 15 minutes, the tapping temperature for continuous casting was 1,590°C.

The process of continuous casting: the thickness of slag layer was 10mm; casting speed was 2.5m/min; the water flow rate of the crystallizer was 2,000 ± 50L/min, the crystallizer has an electromagnetic stirring current of 350A with a frequency of 4Hz and an end electromagnetic stirring current of 400A with a frequency of 11Hz; and the cross-sectional size of the casting billet was 140mm×140mm (width×height).

The processes of casting billet heating and hot continuous rolling: the heating temperature was 1,200°C, the temperature of the steel bar moved onto the cooling bed was 850°C, and after rolling, it was naturally cooled to room temperature. The diameter of the steel bar was 20mm.

### Comparative Example 3

This example provides a corrosion-resistant steel bar, in percentage by weight, comprising 0.25% of C, 0.6% of Si, 2.5% of Mn, 0.5% of Cu, 0.2% of P, 0.01% of S, 0.15% of V, 0.1% of Ti, and the balance of Fe and inevitable impurities;
wherein, Si/Mn=0.24, Cu+P+S=0.71%.

The method for producing the corrosion-resistant steel bar above comprises the following processes.

The process of smelting: molten steel was smelted in the converter with a tapping temperature of 1,600°C. 35kg/t of silicon-manganese (FeMn₆₅S₁₇) and 8kg/t of ferro-silicon (FeSi₇₂) were added during tapping; the argon gas was blown throughout the tapping process, and the bottom blowing pressure in the early stage was controlled to be 0.5MPa and the bottom blowing pressure in the later stage was controlled to be 0.4MPa.

The process of refining: ferro-phosphorus (content of P is 23%, addition amount is 6kg/t), copper plate (content of Cu is 99%, addition amount is 3.5kg/t), ferro-vanadium (content of V is 48%, addition amount is 3kg/t), ferro-titanium (content of Ti is 30%, addition amount is 5kg/t) were added; soft stirring for refining was carried out for 15 minutes, the tapping temperature for continuous casting was 1,610°C.

The process of continuous casting: the thickness of slag layer was 5mm; casting speed was 2.5m/min; the water flow rate of the crystallizer was 2,000 ± 50L/min, the crystallizer has an electromagnetic stirring current of 350A with a frequency of 4Hz and an end electromagnetic stirring current of 400A with a frequency of 11Hz; and the cross-sectional size of the casting billet was 140mm×140mm (width×height).

The processes of casting billet heating and hot continuous rolling: the heating temperature was 1,250°C, the temperature of the steel bar moved onto the cooling bed was 880°C, and after rolling, it was naturally cooled to room temperature. The diameter of the steel bar was 16mm.

### Comparative Example 4

This example provides a corrosion-resistant steel bar, in percentage by weight, comprising 0.25% of C, 2.5% of Si, 2.5% of Mn, 1% of Cu, 0.2% of P, 0.01% of S, 0.05% of Nb, 0.1% of Ti, 0.1% of Al, and the balance of Fe and inevitable impurities;
wherein, Si/Mn=1, Cu+P+S=1.21%.

The method for producing the corrosion-resistant steel bar above comprises the following processes.

The process of smelting: molten steel was smelted in the converter with a tapping temperature of 1,640°C. 35kg/t of silicon-manganese (FeMn₆₅S₁₇) and 35kg/t of ferro-silicon (FeSi₇₂) were added during tapping; the argon gas was blown throughout the tapping process, and the bottom blowing pressure in the early stage was controlled to be 0.5MPa and the bottom blowing pressure in the later stage was controlled to be 0.4MPa.

The process of refining: ferro-phosphorus (content of P is 23%, addition amount is 6kg/t), copper plate (content of Cu is 99%, addition amount is 4kg/t), ferro-niobium (Content of Nb is 65%, addition amount is 0.8kg/t); ferro-titanium (content of Ti is 30%, addition amount is 5kg/t), aluminum particles (content of Al is 99%, addition amount is 1.5kg/t) were added; soft stirring for refining was carried out for 15 minutes, the tapping temperature for continuous casting was 1,610°C.

The process of continuous casting: the thickness of slag layer was 11mm; casting speed was 2.5m/min; the water flow rate of the crystallizer was 2,000 ± 50L/min, the crystallizer has an electromagnetic stirring current of 350A with a frequency of 5Hz and an end electromagnetic stirring current of 400A with a frequency of 12Hz; and the cross-sectional size of the casting billet was 140mm×140mm (width×height).

The processes of casting billet heating and hot continuous rolling: the heating temperature was 1,250°C, the temperature of the steel bar moved onto the cooling bed was 900°C, and after rolling, it was naturally cooled to room temperature. The diameter of the steel bar was 32mm.

### Comparative Example 5

This example provides a corrosion-resistant steel bar, in percentage by weight, comprising 0.15% of C, 0.7% of Si, 1.35% of Mn, 0.3% of Cu, 0.015% of P, 0.005% of S, 0.015% of Nb, 1.35% of Cr, 0.3% of Ni, 0.1% of Mo, and the balance of Fe and inevitable impurities;
wherein, Si/Mn=0.52, Cu+P+S=0.32%.

The method for producing the corrosion-resistant steel bar above comprises the following processes.

The process of smelting: molten steel was smelted in the converter with a tapping temperature of 1,630°C. 27kg/t of silicon-manganese (FeMn₆₅S₁₇) and 14kg/t of ferro-silicon (FeSi₇₂), 30kg/t of ferro-chrome (content of Cr is 65%), 3kg/t of ferro-molybdenum (content of Mo is 55%) were added during tapping; the argon gas was blown throughout the tapping process, and the bottom blowing pressure in the early stage was controlled to be 0.4MPa and the bottom blowing pressure in the later stage was controlled to be 0.3MPa.

The process of refining: ferro-phosphorus (content of P is 23%, addition amount is 1kg/t), copper plate (content of Cu is 99%, addition amount is 2kg/t), ferro-niobium (content of Nb is 65%, addition amount is 0.3kg/t); nickel plate (content of nickel is 99%, addition amount is 2kg/t) were added; soft stirring for refining was carried out for 12 minutes, the tapping temperature for continuous casting was 1,600°C.

The process of continuous casting: the thickness of slag layer was 8mm; casting speed was 2.8m/min; the water flow rate of the crystallizer was 2,000 ± 50L/min, the crystallizer has an electromagnetic stirring current of 350A with a frequency of 3Hz and an end electromagnetic stirring current of 400A with a frequency of 10Hz; and the cross-sectional size of the casting billet was 140mm×140mm (width×height).

The processes of casting billet heating and hot continuous rolling: the heating temperature was 1,220°C, the temperature of the steel bar moved onto the cooling bed was 880°C, and after rolling, it was naturally cooled to room temperature. The diameter of the steel bar was 20mm.

### Experimental examples

This experimental example provides the performance of steel bars obtained from various Examples and Comparative Examples, and the specific description is as follows.

The testing method for yield strength: the test was performed according to the national standard GB/T228.1-2010, "Metallic Materials - Tensile Testing - Part 1: Method of test at room temperature", and the ratio of tensile strength to yield strength was calculated. The ratio of tensile strength to yield strength = tensile strength/yield strength. The test results are shown in Table 1.

The testing method for tensile strength: the test was performed according to the national standard GB/T228.1-2010, "Metallic Materials - Tensile Testing - Part 1: Method of test at room temperature".

The testing method for elongation after fracture: the test was performed according to the national standard GB/T228.1-2010, "Metallic Materials - Tensile Testing - Part 1: Method of test at room temperature".

The testing method for total elongation at maximum force: the test was performed according to GB/T228.1-2010, "Metallic Materials - Tensile Testing - Part 1: Method of test at room temperature".

Relative value of corrosion rate: the chlorine salt corrosion resistance of the corrosion-resistant steel bars prepared in Examples and Comparative Examples was tested respectively, and the increase multiple of their chlorine salt corrosion resistance compared with the HRB400 type steel bar were calculated. The specific testing method was: the corrosion resistant steel bar with a length of 100mm was cut off and the test sample with a diameter of 10mm was obtained by turning it with a lathe. Under the temperature of 35°C and humidity of 70%, the test sample was put into the corrosion solution for salt spray corrosion test. The corrosion solution for testing was 5wt% sodium chloride solution with a pH value of 7.0, and the test time was 14 days. The weight of the sample before and after corrosion was measured by using electron microscope balance. The calculation formula was: relative value of corrosion rate = (weight variation value of corrosion-resistant steel bar before and after corrosion / weight variation value of HRB400 type steel bar before and after corrosion) × 100%.

Testing method for ferrite and pearlite: Zeiss optical microscope was used to observe the microstructure types of corrosion-resistant steel bars prepared in the Examples and Comparative Examples under a field of view of a magnification of 200 times, and the volume ratio of ferrite therein was calculated. Ferrite appears white under an optical microscope, while pearlite appears black. The volume ratio of each microstructure in the unit area was calculated based on the color difference. The results were shown in Tables 1 and 2.

**Table 1. Mechanical performance test results of steel bars of various Examples and Comparative Examples**

| Example | Yield strength /MPa | Tensile strength /MPa | Elongation after fracture /% | Total elongation at maximum force /% | Ratio of tensile strength to yield strength |
|---|---|---|---|---|---|
| Example 1 | 435 | 580 | 34 | 23 | 1.33 |
| Example 2 | 448 | 605 | 33 | 23 | 1.35 |
| Example 3 | 456 | 610 | 30 | 21 | 1.34 |
| Example 4 | 465 | 610 | 30 | 20 | 1.31 |
| Example 5 | 435 | 575 | 38 | 26 | 1.32 |
| Example 6 | 480 | 635 | 34 | 21 | 1.32 |
| Example 7 | 430 | 583 | 38 | 27 | 1.36 |
| Example 8 | 433 | 575 | 38 | 26 | 1.33 |
| Comparative Example 1 | 440 | 565 | 25 | 15 | 1.28 |
| Comparative Example 2 | 390 | 500 | 38 | 26 | 1.28 |
| Comparative Example 3 | 450 | 568 | 28 | 13 | 1.26 |
| Comparative Example 4 | 425 | 630 | 10 | 6 | 1.48 |
| Comparative Example 5 | 545 | 687 | 12 | 3 | 1.26 |

**Table 2. Corrosion resistance test results of steel bars of various Examples and Comparative Examples**

| Example | Microstructure type | Ratio of Ferrite /% | Relative value of corrosion rate compared with ordinary HRB400 in a chloride salt corrosion environment /% |
|---|---|---|---|
| Example 1 | Ferrite+Pearlite | 65 | 22 |
| Example 2 | Ferrite+Pearlite | 65 | 20 |
| Example 3 | Ferrite+Pearlite | 60 | 16 |
| Example 4 | Ferrite+Pearlite | 55 | 27 |
| Example 5 | Ferrite+Pearlite | 69 | 30 |
| Example 6 | Ferrite+Pearlite | 50 | 30 |
| Example 7 | Ferrite+Pearlite | 75 | 34 |
| Example 8 | Ferrite+Pearlite | 73 | 33 |
| Comparative Example 1 | Ferrite+Pearlite | 45 | 88 |
| Comparative Example 2 | Ferrite+Pearlite | 85 | 95 |
| Comparative Example 3 | Ferrite+Pearlite | 40 | 90 |
| Comparative Example 4 | Ferrite+Pearlite | 20 | 90 |
| Comparative Example 5 | Ferrite+Bainite | 5 | 30 |

From the above results, it can be seen that the present application can have better corrosion resistance without adding Cr, Ni, or Mo, and the corrosion-resistant steel bars in the present application can achieve corrosion resistance, mechanical properties, and low cost together. Furthermore, the relative value of corrosion rate of the corrosion-resistant steel bars provided in the present application is not greater than 35%.

From Comparative Examples 1-4, it can be seen that, by controlling Si/Mn and (Cu+P+S), the present application can make the steel bars have both better corrosion resistance and mechanical properties, and achieve a coordinated matching between strength and plasticity. Compared with Comparative Example 5, it can be seen that the mechanical properties, such as elongation after fracture and total elongation at maximum force, of the steel bars provided in the present application are better than those of the steel bars added with Cr. This indicates that the steel bars in the present application can have better strength and mechanical properties without adding Cr, Ni, and Mo, and the cost is lower.

Obviously, the above examples are merely examples made for clear description, rather limiting the implementations. For those of ordinary skill in the art, other different forms of variations or modifications can also be made on the basis of the above-mentioned description. All embodiments are not necessary to be and cannot be exhaustively listed herein. In addition, obvious variations or modifications derived therefrom all fall within the scope of protection of the present application.

## Claims

1. A corrosion-resistant steel bar, wherein, in percentage by weight, the corrosion-resistant steel bar comprises 0.03% to 0.15% of C, 0.8% to 2.0% of Si, 0.8% to 2.0% of Mn, 0.10% to 0.50% of Cu, 0.08% to 0.2% of P, 0.005% to 0.01% of S, 0 to 0.1% of Nb, 0 to 0.2% of V, 0 to 0.1% of Ti, 0 to 0.1% of Al, and the balance of Fe and inevitable impurities;
wherein, 0.6≤Si/Mn≤2.0, 0.25%≤(Cu+P+S)≤0.62%.

2. The corrosion-resistant steel bar of claim 1, wherein, the corrosion-resistant steel bar satisfies at least one of (1) to (5):
(1) the content of C is in a range from 0.05% to 0.12%;
(2) the content of Si is in a range from 0.9% to 1.7%;
(3) the content of Mn is in a range from 0.9% to 1.8%;
(4) the content of Cu is in a range from 0.2% to 0.3%; and
(5) the content of P is in a range from 0.11% to 0.18%.

3. The corrosion-resistant steel bar of claim 1 or 2, wherein, the corrosion-resistant steel bar satisfies at least one of (1) to (4):
(1) the content of C is in a range from 0.06% to 0.09%;
(2) the content of Si is in a range from 1.0% to 1.3%;
(3) the content of Mn is in a range from 1.0% to 1.5%; and
(4) the content of P is in a range from 0.13% to 0.17%.

4. A method for producing the corrosion-resistant steel bar of any one of claims 1 to 3, wherein the method comprises the processes of smelting, refining, continuous casting, casting billet heating and hot continuous rolling.

5. The method of claim 4, wherein the process of continuous casting satisfies at least one of (1) to (4):
(1) a low-carbon steel protective slag with a slag layer thickness ranging from 8 mm to 10mm is used; wherein, a content of carbon in the low-carbon steel is not exceed 0.15%;
(2) a crystallizer has a water flow rate ranging from 1,950 L/min to 2,050L/min;
(3) the crystallizer has an electromagnetic stirring current ranging from 330A to 370A with a frequency ranging from 3Hz to 5Hz, and an end electromagnetic stirring current ranging from 380A to 420A with a frequency ranging from 10Hz to 12Hz; and
(4) a casting speed is in a range from 2.5m/min to 3.5m/min.

6. The method of claim 4 or 5, wherein the process of smelting satisfies at least one of (1) to (3):
(1) a tapping temperature is in a range from 1,600°C to 1,640°C;
(2) silicon-manganese, ferro-silicon, and lime are added in sequence during tapping-deoxidizing-alloying;
wherein the silicon-manganese is added in an amount ranging from 10 kg/t to 30kg/t, and the ferro-silicon is added in an amount ranging from 15 kg/t to 30kg/t; and
(3) a bottom blowing pressure in early stage is in a range from 0.4 MPa to 0.5MPa and a bottom blowing pressure in later stage is in a range from 0.3 MPa to 0.4MPa.

7. The method of claim 4 or 5, wherein a heating temperature during the process of casting billet heating is in a range from 1,200°C to 1,250°C.

8. The method of claim 4 or 5, wherein a temperature of the steel bar moved onto a cooling bed during the process of hot continuous rolling is in a range from 850°C to 900°C.

9. The method of claim 4 or 5, wherein the process of refining satisfies at least one of (1) to (3):
(1) the process of refining comprises a step of adding ferro-phosphorus and copper;
(2) a stirring for refining is carried out for 10 minutes or more; and
(3) a tapping temperature is in a range from 1,580°C to 1,600°C.

10. The method of claim 9, wherein,
a mass content of phosphorus in the ferro-phosphorus is in a range from 20% to 25%;
the ferro-phosphorus is added in an amount ranging from 3kg/t to 6kg/t; and
the copper is added in an amount ranging from 1.5kg/t to 3.5kg/t.
